# EUROPÄISCHE PATENTSCHRIFT

(11) **EP 1 352 820 B1**
(45) Veröffentlichungstag und Bekanntmachung des Hinweises auf die Patenterteilung: **25.08.2004**
(21) Anmeldenummer: 03004548.8
(22) Anmeldetag: 28.02.2003
(51) Int. Cl.: B62J 11/00

(54) **Zubehörbefestigungseinrichtung für Zweiräder**
Article attachment device for cycles
Dispositif de fixation d'accessoires pour cycles

(30) Priorität: 08.04.2002 DE 10215389
(43) Veröffentlichungstag der Anmeldung: 15.10.2003
(73) Patentinhaber: ABUS August Bremicker Söhne KG, 58300 Wetter (DE)
(72) Erfinder: Becker, Thomas, 65597 Hünfelden (DE)
(74) Vertreter: Manitz, Finsterwald & Partner GbR

(56) Entgegenhaltungen:
- DE-U- 9 108 285
- US-A- 4 256 281
- US-A- 4 435 983
- US-A- 5 076 526
- US-A- 5 167 353

## Beschreibung

Die Erfindung betrifft eine Zubehörbefestigungseinrichtung für Zweiräder. Diese dient zur Befestigung eines Zweiradzubehörs, beispielsweise eines Bügelschlosses, an dem Zweirad.

Beispielsweise sind Schlossbefestigungseinrichtungen bekannt, die eine Befestigungsmanschette zur Umgreifung eines Teils des Zweiradrahmens sowie eine Halterungsmanschette zur Aufnahme eines Abschnitts eines Bügelschlosses aufweisen. Mittels zweier Schrauben wird die Befestigungsmanschette an dem Zweiradrahmen fixiert. Dokument US-A-5 076 526 zeigt eine derartige Schlossbefestigungseinrichtung, die jedoch mittels einer Schraube an dem Zweiradrahmen fixiert ist. Diese bekannte Schlossbefestigungseinrichtung erfordert einen unerwünscht hohen Montageaufwand, und sie kann nicht leicht an unterschiedliche Befestigungssituationen angepasst werden.

Es ist daher eine Aufgabe der Erfindung, eine Zubehörbefestigungseinrichtung zu schaffen, die bei einfacher Montage einen universellen Einsatz ermöglicht.

Diese Aufgabe wird gelöst durch eine Zubehörbefestigungseinrichtung mit einem Grundteil, einem Fixierstück und einer Zubehörhalterung zur Aufnahme eines Zweiradzubehörs, wobei das Grundteil einen ersten Gewindeabschnitt und eine Umgreifungsaussparung zur Aufnahme eines Zweiradstangenabschnitts aufweist, wobei ferner die Umgreifungsaussparung den ersten Gewindeabschnitten in zwei einander gegenüberstehende Gewindebereiche unterteilt, und wobei das Fixierstück einen zweiten Gewindeabschnitt aufweist, der mit dem ersten Gewindeabschnitt dergestalt zusammenwirkt, dass durch Verschrauben des Fixierstücks mit dem Grundteils der Zweiradstangenabschnitt in der Umgreifungsaussparung fixiert, insbesondere klemmfixiert werden kann.

Die erfindungsgemäße Zubehörbefestigungseinrichtung weist also zumindest ein Grundteil und ein Fixierstück auf, die gemeinsam an einem Abschnitt eines Zweirads, beispielsweise einem Abschnitt des Zweiradrahmens oder einem Abschnitt eines Gepäckträgerrahmens, befestigt werden können. Zu diesem Zweck ist das Grundteil mit einem ersten Gewindeabschnitt sowie mit einer Umgreifungsaussparung versehen, die diesen Gewindeabschnitt in zwei getrennte Gewindebereiche unterteilt und an einer Einführöffnung des Grundteils mündet. Die beiden Gewindebereiche bilden dabei - trotz ihrer Unterteilung - ein einziges Gewinde.

Das Grundteil kann über die genannte Einführöffnung derart auf den Zweiradstangenabschnitt aufgesetzt werden, dass dieser quer durch die Umgreifungsaussparung verläuft. Durch nachfolgendes Aufsetzen des Fixierstücks auf das die Einführöffnung aufweisende freie Ende des ersten Gewindeabschnitts des Grundteils kann die Umgreifungsaussparung umfänglich geschlossen werden, so dass der Zweiradstangenabschnitt darin gefangen ist. Anschließend kann der Zweiradstangenabschnitt zwischen dem Grundteil und dem Fixierstück verklemmt werden, nämlich indem das Fixierstück mittels des zweiten Gewindeabschnitts so weit auf das Grundteil aufgeschraubt wird, bis sowohl das Fixierstück als auch das Grundteil - zumindest indirekt - unter Spannung an dem Zweiradstangenabschnitt anliegen. Der zweite Gewindeabschnitt wirkt dabei mit den beiden Gewindebereichen des ersten Gewindeabschnitts zusammen.

Das Grundteil und das Fixierstück sind somit an dem Zweiradstangenabschnitt fixiert. Mittels der Zubehörhalterung, die an dem Grundteil, dem Fixierstück oder einem zusätzlichen Halterungsteil vorgesehen sein kann, kann nun ein Zweiradzubehör an dieser Anordnung befestigt werden.

Ein Vorteil der Erfindung besteht darin, dass die Montage der Zubehörbefestigungseinrichtung an dem Zweirad schnell und mit lediglich geringem Aufwand erfolgen kann. Dies ist darauf zurückzuführen, dass aufgrund der Unterteilung des ersten Gewindeabschnitts in zwei durch die Umgreifungsaussparung getrennte Gewindebereiche im Wesentlichen eine einzige Schraubverbindung geschlossen werden muss, um die Zubehörbefestigungseinrichtung am Zweirad zu fixieren.

Ein weiterer Vorteil besteht darin, dass aufgrund der vergleichsweise ungewöhnlichen Ausbildung der Umgreifungsaussparung an dem ersten Gewindeabschnitt des Grundteils der erforderliche Montageablauf ohne weiteres intuitiv verständlich und somit auch für den unerfahrenen Anwender sofort nachvollziehbar und durchführbar ist.

Außerdem kann die Zubehörbefestigungseinrichtung in flexibler Anordnung, also mit mehreren unterschiedlichen Freiheitsgraden an dem Zweirad befestigt werden. Beispielsweise kann das Grundteil entlang der Längsrichtung des Zweiradstangenabschnitts an beliebiger Stelle angeordnet werden. Ferner ist insbesondere bei einem runden Zweiradstangenabschnitt eine Anordnung der Zubehörbefestigungseinrichtung in beliebiger Drehwinkellage bezüglich des Zweiradstangenabschnitts möglich.

Ein besonderer Vorteil der Erfindung besteht darin, dass die erwünschte endgültige Position der Zubehörbefestigungseinrichtung vom Anwender leicht nachjustiert werden kann, da lediglich das mit dem Grundteil verschraubte Fixierstück leicht gelockert und nach der Korrektur wieder angezogen werden muss.

Im Unterschied zu bekannten Einrichtungen, die beispielsweise nach dem Prinzip einer Kabelbinderbefestigung arbeiten, ist die erfindungsgemäße Zubehörbefestigungseinrichtung wiederverwendbar, d.h. mehrmals an einem oder unterschiedlichen Zweirädern befestigbar und wieder lösbar.

Ferner kann die erfindungsgemäße Zubehörbefestigungseinrichtung für unterschiedliche Zweiräder sowie an einem bestimmten Zweirad universell eingesetzt werden, da durch entsprechend große Bemessung der Umgreifungsaussparung Zweiradstangenabschnitte mit den unterschiedlichsten Querschnittsformen und Durchmessern zur Befestigung geeignet sind. Beispielsweise kann bei einer lichten Breite der Umgreifungsaussparung von 17 mm die Zubehörbefestigungseinrichtung an Zweiradstangenabschnitten fixiert werden, deren Durchmesser zwischen 5 und 16,5 mm beträgt.

Außerdem eignet sich die erfindungsgemäße Zubehörbefestigungseinrichtung besonders gut für eine Mehrpunktbefestigung. Aufgrund des besonders einfachen Aufbaus und der einfachen Montage können nämlich ohne weiteres mehrere Zubehörbefestigungseinrichtungen an dem betreffenden Zweirad montiert werden. Durch eine solche Mehrpunktbefestigung wird ein besonders zuverlässiger und rüttelfreier Sitz des Zweiradzubehörs gewährleistet. Dies ist beispielsweise bei vergleichsweise schweren Bügelschlössern von besonderem Vorteil.

Bei einer bevorzugten Ausführungsform ist die Umgreifungsaussparung als ein Längsschlitz ausgebildet, der ausgehend von einer Einführöffnung an einer Stirnseite des Grundteils entlang einer Längsrichtung oder der Gewindeachse des Grundteils verläuft.

Vorzugsweise weist das Grundteil einen Schraubenschaft auf, an dem der erste Gewindeabschnitt als ein Außengewinde ausgebildet ist. Durch die Umgreifungsaussparung ist ein derartiger Schraubenschaft letztlich in zwei Schenkel unterteilt, an denen jeweils ein äußerer Gewindebereich vorgesehen ist. Komplementär hierzu ist bei dieser Ausführungsform der zweite Gewindeabschnitt des Fixierstücks als ein Innengewinde ausgebildet, so dass das Fixierstück als Schraubenmutter fungiert.

Bei dieser Ausführungsform ist es bevorzugt, wenn eine zentrale Stabilisierungseinrichtung vorgesehen ist, die beim Verschrauben des Fixierstücks mit dem Grundteil in einen Teil der Umgreifungsaussparung des Grundteils eingreift. Dadurch können die beiden die Außengewindebereiche tragenden Schraubenschaftschenkel gegen ein unerwünschtes Verbiegen oder Verschwenken stabilisiert werden, um bei dem Verschrauben ein Überspringen eines Gewindegangs zu verhindern. Diese Stabilisierungseinrichtung ist vorzugsweise als ein Stabilisierungsabschnitt an dem Fixierstück ausgebildet. Allerdings kann die Stabilisierungseinrichtung auch an einem zusätzlichen Teil, insbesondere einem Halterungsteil vorgesehen sein.

Alternativ zu der erläuterten Ausführung des Grundteils als ein Schraubenschaft kann der erste Gewindeabschnitt an dem Grundteil als ein Innengewinde ausgebildet sein, während der zweite Gewindeabschnitt an dem Fixierstück durch ein Außengewinde gebildet ist. In diesem Fall ist das Grundteil also nach der Art einer längsgeschlitzten Schraubenmutter ausgebildet, in der - nach Einführen des Zweiradstangenabschnitts in die Umgreifungsaussparung - das Fixierstück verschraubt wird. Auch bei dieser Ausführungsform kann eine Stabilisierungseinrichtung vorgesehen sein, um ein Auseinanderweichen der beiden Gewindebereiche des Grundteils zu verhindern. Beispielsweise kann eine Stabilisierungshülle vorgesehen sein, die vor oder mit dem Verschrauben des Fixierstücks über den ersten Gewindeabschnitt oder einen Teil hiervon geschoben wird.

Um den Zweiradstangenabschnitt innerhalb der Umgreifungsaussparung möglichst zuverlässig zu fixieren, weisen das Grundteil und das Fixierstück oder ein zusätzliches Halterungsteil vorzugsweise einen ersten und einen zweiten Klemmabschnitt auf, die beim Verschrauben des Fixierstücks mit dem Grundteil aufeinander zu bewegt werden. Die beiden Klemmabschnitte sind bevorzugt für einen Formschluss mit einem im Querschnitt runden, ovalen oder eckigen Zweiradstangenabschnitt ausgebildet.

Weiterhin ist es bevorzugt, wenn das Fixierstück oder ein zusätzliches Halterungsteil eine Fixiereinrichtung aufweist, die beim Verschrauben des Fixierstücks mit dem Grundteil in die Umgreifungsaussparung eingreift, um an einem darin befindlichen Zweiradstangenabschnitt angreifen und diesen zusätzlich fixieren zu können. Eine derartige Fixiereinrichtung kann beispielsweise durch einen Fixierdorn gebildet sein, der entlang der gemeinsamen Gewindeachse von Grundteil und Fixierstück angeordnet ist.

Gemäß einer bevorzugten Weiterbildung weist die erfindungsgemäße Zubehörbefestigungseinrichtung zusätzlich zu dem Grundteil und dem Fixierstück ein Halterungsteil auf, an dem die Zubehörhalterung zur Aufnahme des Zweiradzubehörs ausgebildet ist. Ein derartiges zusätzliches Halterungsteil ermöglicht die Verwirklichung zusätzlicher Freiheitsgrade hinsichtlich der Anordnung der Zubehörhalterung bzw. des daran befestigten Zweiradzubehörs relativ zu dem Zweirad.

Beispielsweise kann vorgesehen sein, dass das Halterungsteil an dem Grundteil und dem Fixierstück in einer frei wählbaren Winkellage bezüglich der gemeinsamen Gewindeachse von Grundteil und Fixierstück fixiert werden kann, um die Winkellage der an dem Halterungsteil vorgesehenen Zubehörhalterung frei wählen zu können. Insbesondere kann eine solche Anordnung von Grundteil, Fixierstück und Halterungsteil vorgesehen sein, bei der das Halterungsteil aufgrund des Verschraubens des Fixierstücks mit dem Grundteil eingeklemmt wird, beispielsweise zwischen dem Fixierstück einerseits und dem an dem Grundteil anliegenden Zweiradstangenabschnitt andererseits.

Alternativ zu der erläuterten Weiterbildung mit separatem Halterungsteil kann die Zubehörhalterung auch direkt an dem Grundteil oder an dem Fixierstück vorgesehen sein, so dass die Zubehörbefestigungseinrichtung einen besonders einfachen Aufbau besitzt.

Hinsichtlich der Zubehörhalterung ist es bevorzugt, wenn diese eine beispielsweise durch eine Vertiefung gebildete Zubehöraufnahme besitzt, sowie ein elastisches Spannband oder einen verschwenkbaren Haltebügel, um ein in die Zubehöraufnahme eingeführtes Zweiradzubehör darin fixieren zu können. Ferner kann die Zubehörhalterung eine Einhakeinrichtung oder eine Arretiereinrichtung aufweisen, um das freie Ende des genannten Spannbands oder Haltebügels fixieren zu können.

Weitere Ausführungsformen der Erfindung sind in den Unteransprüchen genannt. Die Erfindung wird nachfolgend beispielhaft unter Bezugnahme auf die Zeichnungen erläutert; in diesen zeigen:
- Fig. 1: eine Perspektivansicht einer erfindungsgemäßen Zubehörbefestigungseinrichtung in montiertem Zustand, und
- Fig. 2 und 3: jeweils eine Explosionsdarstellung dieser Zubehörbefestigungseinrichtung.

Die in den Figuren gezeigte Ausführungsform der Zubehörbefestigungseinrichtung besitzt ein Grundteil 11, ein Fixierstück 12 sowie ein Halterungsteil 13 mit einer Zubehörhalterung 14.

Das Grundteil 11 besitzt eine zylindrische Grundform mit einem ersten Gewindeabschnitt in Form eines Außengewindes 15. Ferner weist das Grundteil 11 eine Umgreifungsaussparung 17 auf, die sich ausgehend von einer Einführöffnung 18 an einer Stirnseite des Grundteils 11 entlang der Gewindeachse des Außengewindes 15 erstreckt. Die Umgreifungsaussparung 17 ist senkrecht zu dieser Gewindeachse als eine Durchgangsöffnung ausgebildet. Das Grundteil 11 ist somit als ein Schraubenschaft ausgebildet, der durch einen Längsschlitz in zwei Schraubenschaftschenkel 19, 20 unterteilt ist. Aufgrund dieser Unterteilung ist auch das Außengewinde 15 in zwei äußere Gewindebereiche 21, 22 unterteilt, die sich - getrennt durch die Umgreifungsaussparung 17 - gegenüberstehen.

Das Fixierstück 12 ist im Wesentlichen hohlzylinderförmig ausgebildet. Entlang der Innenmantelfläche dieser Hohlzylinderform erstreckt sich ein zweiter Gewindeabschnitt in Form eines Innengewindes 23, das komplementär zu dem Außengewinde 15 des Grundteils 11 ausgebildet ist. Eine Stirnseite des Fixierstücks 12 ist geschlossen, wobei im Zentrum dieser Stirnseite nach außen eine Angriffseinrichtung 25 zur Aufnahme eines Schraubwerkzeugs, beispielsweise eines Sechskantschraubendrehers, eines Schlitzschraubendrehers oder eines Kreuzschraubendrehers vorgesehen ist.

Ausgehend von dieser Stirnseite erstreckt sich innerhalb der Hohlzylinderform des Fixierstücks 12 entlang der Gewindeachse des Innengewindes 23 ein hohlzylindrischer Stabilisierungsabschnitt 27, dessen freie Stirnseite über die entsprechende Stirnseite der hohlzylindrischen Grundform des Fixierstücks 12 geringfügig hinausragt.

Entlang des Umfangs der äußeren Mantelfläche des Fixierstücks 12 ist ferner eine Verrastungsnut 29 vorgesehen.

Das Halterungsteil 13 besitzt einen hohlzylindrischen Umgreifungsabschnitt 31 zur Umgreifung des Fixierstücks 12, der an einer Stirnseite zu einem radial nach innen gerichteten Mitnehmerbund 33 ausgebildet ist.

Entlang des Umfangs der Innenmantelfläche des Umgreifungsabschnitts 31 sind mehrere Verrastungsvorsprünge 35 angeordnet, von denen in den Figuren nur einer zu sehen ist.

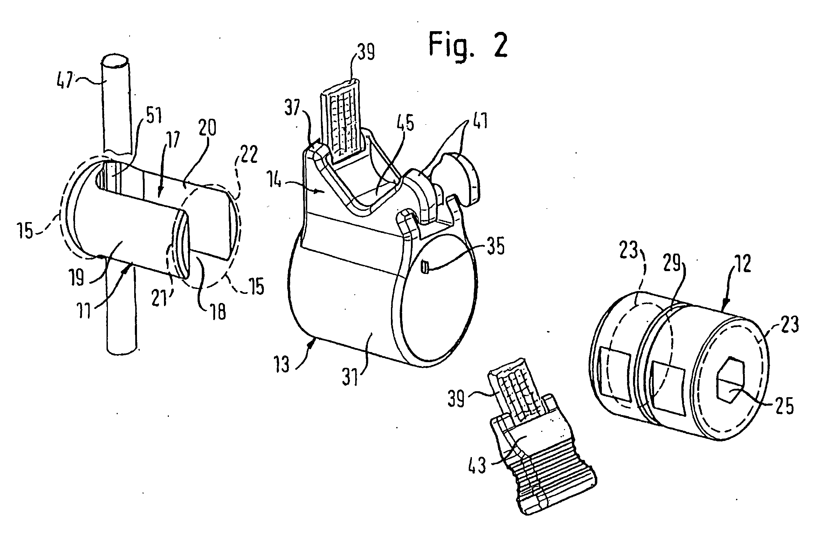

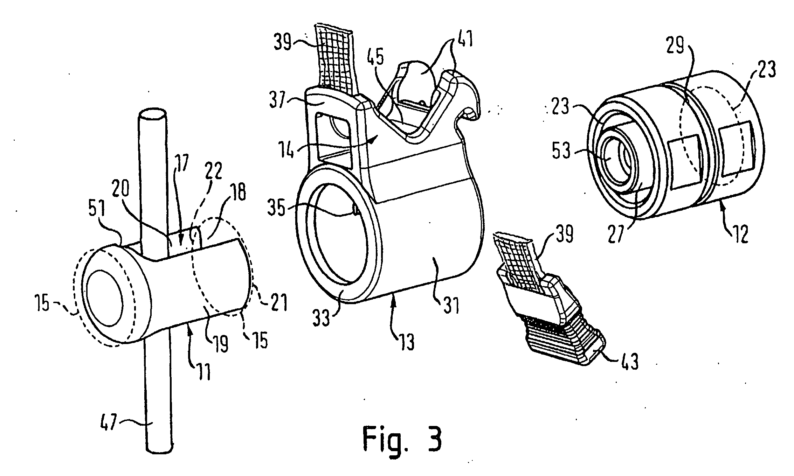

Die entlang der Außenmantelfläche des Umgreifungsabschnitts 31 angeordnete Zubehörhalterung 14 weist an einem Ende einen Bandfixierabschnitt 37 zur Fixierung eines elastischen Spannbands 39 auf, das in Fig. 2 und 3 lediglich teilweise gezeigt ist. An dem bezüglich der Axialrichtung des Halterungsteils 13 gegenüberliegenden Ende besitzt die Zubehörhalterung 14 eine Einhakeinrichtung 41 in Form zweier abgekröpfter paralleler Stege. Die Einhakeinrichtung 41 ist komplementär zu einem Spanngriff 43 ausgebildet, der an dem freien Ende des Spannbands 39 befestigt ist. Zwischen dem Bandfixierabschnitt 37 und der Einhakeinrichtung 41 weist die Zubehörhalterung 14 eine Zubehöraufnahme 45 auf, die durch zwei parallele Stege gebildet ist, die gleichförmige, im Wesentlichen dreieckige Vertiefungen aufweisen.

Die gezeigte Zubehörbefestigungseinrichtung wird folgendermaßen an einem Stangenabschnitt eines Zweirads, beispielsweise an einem Gepäckträgerrahmenabschnitt 47 eines Fahrrads montiert:

Zunächst wird das Grundteil 11 über die Einführöffnung 18 derart auf den Gepäckträgerrahmenabschnitt 47 aufgesetzt, dass dieser innerhalb der Umgreifungsaussparung 17 zu liegen kommt, und zwar quer zu der Gewindeachse des Grundteils 11 (vgl. Fig. 3).

Anschließend wird das Fixierstück 12 gemeinsam mit dem auf das Fixierstück 12 aufgesetzten Halterungsteil 13 an dem Außengewinde 15 des Grundteils 11 angesetzt. Das Halterungsteil 13 folgt dabei einer Axialbewegung des Fixierstücks 12, da der Mitnehmerbund 33 an der in Fig. 3 gezeigten äußeren Stirnseite des Fixierstücks 12 anliegt.

Nun wird das Fixierstück 12 mit dem Grundteil 11 verschraubt, wobei das Außengewinde 15 mit dem Innengewinde 23 zusammenwirkt. Dieses Verschrauben bewirkt, dass der Gepäckträgerrahmenabschnitt 47 zwischen dem Grundteil 11 einerseits und dem an dem Fixierstück 12 anliegenden Halterungsteil 13 andererseits eingeklemmt wird, so dass schließlich das Grundteil 11, das Fixierstück 12 und das Halterungsteil 13 in fester Anordnung an dem Gepäckträgerrahmenabschnitt 47 fixiert sind.

Somit ist durch einen einzigen Schraubvorgang die in den Figuren gezeigte Zubehörbefestigungseinrichtung an dem betreffenden Zweirad fixiert. Die endgültige Lage und Ausrichtung der Zubehörhalterung 14 kann dabei beliebig eingestellt werden, nämlich indem kurz vor dem endgültigen Fixieren des Fixierstücks 12 an dem Grundteil 11 die Anordnung aus Grundteil 11, Fixierstück 12 und Halterungsteil 13 entsprechend positioniert wird. Beispielsweise kann diese Anordnung entlang der Längsrichtung des Gepäckträgerrahmenabschnitts 47 verschoben oder bezüglich dieser Längsrichtung verdreht werden. Außerdem kann das Halterungsteil 13 mit der Zubehörhalterung 14 bezüglich der gemeinsamen Gewindeachse von Grundteil 11 und Fixierstück 12 stufenlos in eine beliebige Winkellage verdreht werden.

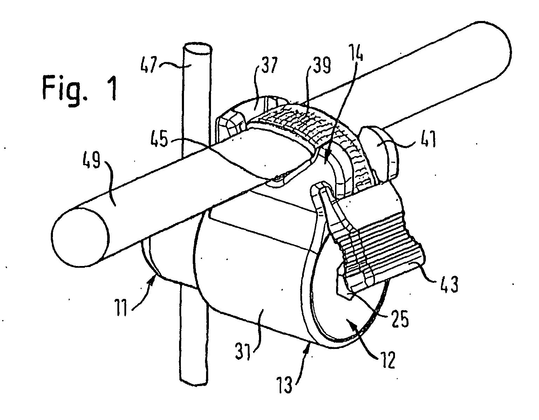

Nachdem die Fixierung der Zubehörbefestigungseinrichtung an dem Gepäckträgerrahmenabschnitt 47 in der gewünschten Lage und Ausrichtung vollzogen worden ist, kann ein Zweiradzubehör an der Zubehörhalterung 14 und somit an dem Gepäckträgerrahmenabschnitt 47 befestigt werden, wie dies in Fig. 1 für einen Bügelabschnitt 49 eines Bügelschlosses gezeigt ist. Zu diesem Zweck wird der Bügelabschnitt 49 des Zweiradzubehörs in die Zubehöraufnahme 45 eingelegt. Anschließend wird das Spannband 39 über den Bügelabschnitt 49 gezogen und mittels des Spanngriffs 43 in der Einhakeinrichtung 41 verhakt.

Die erläuterte Montage der gezeigten Zubehörbefestigungseinrichtung an dem Gepäckträgerrahmenabschnitt 47 wird dadurch erleichtert, dass das Fixierstück 12 und das Halterungsteil 13 durch zusammenwirkende Befestigungsmittel in Form der Verrastungsvorsprünge 35 und der Verrastungsnut 29 zu einer Baueinheit vormontierbar sind. Nach dieser Vormontage ist das Halterungsteil 13 an dem Fixierstück 12 trotz axialer Fixierung drehbar gelagert.

Bei dem gezeigten Ausführungsbeispiel sind folgende Maßnahmen vorgesehen, um einen besonders zuverlässigen Sitz der Zubehörbefestigungseinrichtung an dem Gepäckträgerrahmenabschnitt 47 zu gewährleisten:

Die Umgreifungsaussparung 17 des Grundteils 11 und der Außendurchmesser des Stabilisierungsabschnitts 27 des Fixierstücks 12 sind dergestalt bemessen, dass der Stabilisierungsabschnitt 27 während des erläuterten Verschraubens die beiden Schenkel des Grundteils 11 gegen eine jeweils nach innen gerichtete Schwenkbewegung stabilisiert. Dadurch wird beim Verschrauben ein unerwünschtes Überspringen eines Gewindegangs verhindert.

Ferner ist die Innenfläche des Grundteils 11, die die Umgreifungsaussparung 17 entlang der Gewindeachse begrenzt, als ein Klemmabschnitt 51 ausgebildet, der für einen Formschluss mit dem runden Gepäckträgerrahmenabschnitt 47 eine konkave Wölbung aufweist. Wie aus Fig. 2 ersichtlich, ist der Klemmabschnitt 51 mit zwei unterschiedlichen Krümmungsradien doppelt konkav geformt, um für Gepäckträgerrahmenabschnitte 47 unterschiedlichen Durchmessers geeignet zu sein. Alternativ zu der in Fig. 2 gezeigten Ausgestaltung kann auch eine einzige runde oder ovale Krümmung des Klemmabschnitts 51, oder eine eckige, insbesondere eine rechteckige oder eine spitzwinklige oder stumpfwinklige Begrenzung der Umgreifungsaussparung 17 vorgesehen sein. Insbesondere kann die Umgreifungsaussparung 17 entlang der Gewindeachse mit abnehmender Breite ausgebildet sein, so dass beim Verschrauben des Fixierstücks 12 mit dem Grundteil 11 letztlich eine Klemmwirkung quer zu der Gewindeachse erzielt wird.

In entsprechender Weise ist die in Fig. 3 gezeigte äußere Stirnseite des Mitnehmerbunds 33 des Halterungsteils 13 als ein Klemmabschnitt vorgesehen, der mit dem Klemmabschnitt 51 des Grundteils 11 zusammenwirkt, um eine Fixierung an dem Gepäckträgerrahmenabschnitt 47 herbeizuführen. Der Mitnehmerbund 33 kann auch für einen Formschluss mit dem Gepäckträgerrahmenabschnitt 47 ausgebildet sein. Beispielsweise kann der Mitnehmerbund 33 in einer sternförmigen Anordnung mehrere Vertiefungen aufweisen, die gleichzeitig ein Winkelraster für die möglichen Winkellagen des Halterungsteils 13 relativ zu der Längsrichtung des Gepäckträgerrahmenabschnitts 47 vorgeben.

Alternativ zu dieser Ausgestaltung kann auch der in Fig. 3 gezeigte äußere Stirnseitenbund des Fixierstücks 12 oder der in Fig. 3 gezeigte innere Stirnseitenbund des Stabilisierungsabschnitts 27 als ein Klemmabschnitt vorgesehen sein, der direkt oder indirekt an dem Gepäckträgerrahmenabschnitt 47 angreift.

Als weitere Maßnahme zur Stabilisierung des Sitzes der an dem Gepäckträgerrahmenabschnitt 47 befestigten Zubehörbefestigungseinrichtung kann an dem Fixierstück 12 ein - in den Figuren nicht gezeigter - Fixierdom vorgesehen sein, der sich beim Verschrauben des Fixierstücks 12 mit dem Grundteil 11 in den Gepäckträgerrahmenabschnitt 47 bohrt. Dadurch wird eine Sicherung gegen ein Verdrehen oder Verschieben der Zubehörbefestigungseinrichtung bezüglich der Längsrichtung des Gepäckträgerrahmenabschnitts 47 erreicht. Ein derartiger Fixierdorn kann beispielsweise an einer Mutter angebracht sein, die in den in Fig. 3 gezeigten Innenraum 53 des Stabilisierungsabschnitts 27 des Fixierstücks 12 eingesetzt oder eingepresst wird.

Zu dem gezeigten Ausführungsbeispiel ist anzumerken, dass das Halterungsteil 13 bzw. dessen Umgreifungsabschnitt 31 einerseits und die Zubehörhalterung 14 andererseits auch zweistückig ausgebildet sein können, wobei die Zubehörhalterung an dem Halterungsteil drehbeweglich befestigt ist. Dadurch kann ein zusätzlicher Freiheitsgrad hinsichtlich der Anordnung der Zubehörhalterung 14 bzw. des daran befestigten Zweiradzubehörs 49 relativ zu dem Zweirad 47 verwirklicht werden. Beispielsweise kann eine Anlenkung der Zubehörhalterung 14 an dem Umgreifungsabschnitt 31 dergestalt vorgesehen sein, dass - bezüglich der Darstellung gemäß Fig. 1 - der Zubehörabschnitt 49 innerhalb einer horizontalen Ebene gedreht werden kann. Vorzugsweise kann bei einer derartigen Ausführungsform die Zubehörhalterung 14 in einer vorgebbaren Drehwinkellage relativ zu dem Halterungsteil 13 fixiert werden.

Schließlich ist zu dem in den Figuren gezeigten Ausführungsbeispiel anzumerken, dass anstelle der Verwendung eines an der Angriffseinrichtung 25 angreifenden Werkzeugs auch ein werkzeugloses Verschrauben des Fixierstücks 12 mit dem Grundteil 11 vorgesehen sein kann. Zu diesem Zweck kann das Fixierstück 12 beispielsweise mit einer entlang des Umfangs ausgebildeten Riffelung oder mit Eingriffsvertiefungen ausgestattet sein.

### Bezugszeichenliste

- 11: Grundteil
- 12: Fixierstück
- 13: Halterungsteil
- 14: Zubehörhalterung
- 15: Außengewinde
- 17: Umgreifungsaussparung
- 18: Einführöffnung
- 19: Schraubenschaftschenkel
- 20: Schraubenschaftschenkel
- 21: Gewindebereich
- 22: Gewindebereich
- 23: Innengewinde
- 25: Angriffseinrichtung
- 27: Stabilisierungsabschnitt
- 29: Verrastungsnut
- 31: Umgreifungsabschnitt
- 33: Mitnehmerbund
- 35: Verrastungsvorsprung
- 37: Bandfixierabschnitt
- 39: Spannband
- 41: Einhakeinrichtung
- 43: Spanngriff
- 45: Zubehöraufnahme
- 47: Gepäckträgerrahmenabschnitt
- 49: Zubehörabschnitt
- 51: Klemmabschnitt
- 53: Innenraum

## Patentansprüche

1. Zubehörbefestigungseinrichtung für Zweiräder, mit
- einem Grundteil (11) mit einem ersten Gewindeabschnitt (15) und einer Umgreifungsaussparung (17) zur Aufnahme eines Zweiradstangenabschnitts (47), wobei die Umgreifungsaussparung den ersten Gewindeabschnitt in zwei einander gegenüberstehende Gewindebereiche (21, 22) unterteilt,
- einem Fixierstück (12) mit einem zweiten Gewindeabschnitt (23), der mit dem ersten Gewindeabschnitt (15) dergestalt zusammenwirkt, dass durch Verschrauben des Fixierstücks (12) mit dem Grundteil (11) der Zweiradstangenabschnitt (47) in der Umgreifungsaussparung (17) fixierbar ist, und
- einer Zubehörhalterung (14) zur Aufnahme eines Zweiradzubehörs (49).

2. Zubehörbefestigungseinrichtung nach Anspruch 1,
**dadurch gekennzeichnet,**
**dass** die Umgreifungsaussparung (17) als ein Längsschlitz an dem Grundteil (11) ausgebildet ist.

3. Zubehörbefestigungseinrichtung nach einem der vorhergehenden Ansprüche,
**dadurch gekennzeichnet,**
**dass** das Grundteil (11) einen Schraubenschaft aufweist, an dem der erste Gewindeabschnitt als ein Außengewinde (15) ausgebildet ist, und
**dass** der zweite Gewindeabschnitt an dem Fixierstück (12) als ein Innengewinde (23) ausgebildet ist,
wobei vorzugsweise eine zentrale Stabilisierungseinrichtung (27) zum Eingriff in die Umgreifungsaussparung (17) des Grundteils (11) vorgesehen ist.

4. Zubehörbefestigungseinrichtung nach einem der vorhergehenden Ansprüche,
**dadurch gekennzeichnet,**
**dass** der erste Gewindeabschnitt an dem Grundteil als ein Innengewinde und der zweite Gewindeabschnitt an dem Fixierstück als ein Außengewinde ausgebildet ist.

5. Zubehörbefestigungseinrichtung nach einem der vorhergehenden Ansprüche,
**dadurch gekennzeichnet,**
**dass** das Grundteil einen die Umgreifungsaussparung (17) begrenzenden ersten Klemmabschnitt (51) aufweist, und dass das Fixierstück (11) oder ein zusätzliches Halterungsteil (13) einen zweiten Klemmabschnitt (33) aufweist, der für ein Fixieren des Zweiradstangenabschnitts (47) mit dem ersten Klemmabschnitt zusammenwirkt,
wobei der erste Klemmabschnitt (51) und/oder der zweite Klemmabschnitt (33) vorzugsweise für einen Formschluss mit dem Zweiradstangenabschnitt (47) ausgebildet sind.

6. Zubehörbefestigungseinrichtung nach einem der vorhergehenden Ansprüche,
**dadurch gekennzeichnet,**
**dass** das Fixierstück (12) oder ein zusätzliches Halterungsteil (13) eine Fixiereinrichtung, insbesondere einen zentralen Fixierdorn, aufweist, die bzw. der bei Verschrauben des Fixierstücks mit dem Grundteil in die Umgreifungsaussparung (17) eingreift,
und/oder
**dass** das Fixierstück (12) für das Verschrauben mit dem Grundteil (11) eine Angriffseinrichtung (25) zur Aufnahme eines Werkzeugs aufweist.

7. Zubehörbefestigungseinrichtung nach einem der vorhergehenden Ansprüche,
**dadurch gekennzeichnet,**
**dass** ein Halterungsteil (13) vorgesehen ist, an dem die Zubehörhalterung (14) angeordnet ist.

8. Zubehörbefestigungseinrichtung nach Anspruch 7,
**dadurch gekennzeichnet,**
**dass** durch Verschrauben des Fixierstücks (12) das Halterungsteil (13) an dem Grundteil (11) und dem Fixierstück (12) fixierbar, insbesondere einklemmbar ist,
und/oder
**dass** das Halterungsteil (13) an dem Grundteil (11) und dem Fixierstück (12) in einer frei wählbaren Winkellage fixierbar ist.

9. Zubehörbefestigungseinrichtung nach einem der Ansprüche 7 oder 8,
**dadurch gekennzeichnet,**
**dass** das Halterungsteil (13) einen Mitnehmerbund (33) zum Anliegen an dem Fixierstück (12) aufweist,
und/oder
**dass** das Halterungsteil (13) einen Umgreifungsabschnitt (31) zum Umgreifen des Fixierstücks (12) und/oder des Grundteils (11) aufweist,
und/oder
**dass** die Zubehörhalterung (14) an dem Halterungsteil (13) drehbeweglich befestigt ist, wobei die Zubehörhalterung (14) vorzugsweise in einer vorgebbaren Drehwinkellage relativ zu dem Halterungsteil (13) fixierbar ist.

10. Zubehörbefestigungseinrichtung nach einem der vorhergehenden Ansprüche,
**dadurch gekennzeichnet,**
**dass** die Zubehörhalterung (14) eine Zubehöraufnahme (45) sowie ein elastisches Spannband (39) oder einen Haltebügel zum Schließen der Zubehöraufnahme aufweist,
wobei die Zubehörhalterung vorzugsweise eine Einhakeinrichtung (41) oder eine Arretiereinrichtung zur Befestigung des freien Endes (43) des Spannbands (39) oder des Haltebügels an der Zubehörhalterung (14) aufweist.

## Claims

1. An accessory securing device for two-wheelers, comprising
- a base part (11) having a first thread section (15) and a surrounding cut-out (17) for the reception of a two-wheeler bar section (47), with the surrounding cut-out dividing the first thread section into two threaded regions (21, 22) disposed opposite one another;
- a fixing piece (12) having a second thread section (23) which cooperates with the first thread section (15) such that the two-wheeler bar section (47) can be fixed in the surrounding cut-out (17) by screwing the fixing piece (12) to the base part (11); and
- an accessory holder (14) for the reception of a two-wheeler accessory (49).

2. An accessory securing device in accordance with claim 1, **characterised in that** the surrounding cut-out (17) is made as an elongate slit at the base part (11).

3. An accessory securing device in accordance with any one of the preceding claims, **characterised in that** the base part (11) has a screw shaft at which the first thread section is made as an external thread (15); and **in that** the second thread section is made as an internal thread (23) at the fixing piece (12), with a central stabilising device (27) preferably being provided for engagement into the surrounding cut-out (17) of the base part (11).

4. An accessory securing device in accordance with any one of the preceding claims, **characterised in that** the first thread section is made as an internal thread at the base part and the second thread section is made as an external thread at the fixing piece.

5. An accessory securing device in accordance with any one of the preceding claims, **characterised in that** the base part has a first clamping section (51) bounding the surrounding cut-out (17); and **in that** the fixing piece (11) or an additional holding part (13) has a second clamping section (33) which cooperates with the first clamping section for a fixing of the two-wheeler bar section (47), with the first clamping section (51) and/or the second clamping section (33) preferably being made for a shape-matched fit with the two-wheeler bar section (47).

6. An accessory securing device in accordance with any one of the preceding claims, **characterised in that** the fixing piece (12) or an additional holder part (13) has a fixing device, in particular a central fixing mandrel, which engages into the surrounding cut-out (17) on the screwing of the fixing piece to the base part; and/or **in that** the fixing piece (12) has a placement device (25) for the reception of a tool for the screwing to the base part (11).

7. An accessory securing device in accordance with any one of the preceding claims, **characterised in that** a holder part (13) is provided on which the accessory holder (14) is arranged.

8. An accessory securing device in accordance with claim 7, **characterised in that** the holder part (13) can be fixed, in particular clamped, to the base part (11) and to the fixing piece (12) by a screw connection of the fixing piece (12); and/or **in that** the holder part (13) can be fixed in a freely selectable angular position to the base part (11) and to the fixing piece (12).

9. An accessory securing device in accordance with claim 7 or claim 8, **characterised in that** the holder part (13) has a driver flange (33) for contact with the fixing piece (12); and/or **in that** the holder part (13) has a surrounding section (31) for the surrounding of the fixing piece (12) and/or of the base part (11); and/or **in that** the accessory holder (14) is rotationally movably secured to the holder part (13), with the accessory holder (14) preferably being fixable in a pre-settable position of angular rotation relative to the holder part (13).

10. An accessory securing device in accordance with any one of the preceding claims, **characterised in that** the accessory holder (14) has an accessory mount (45) and an elastic band (39) or a holding hoop to close the accessory mount, wherein the accessory holder preferably has a hook-in device (41) or a locking device for securing the free end (43) of the elastic band (39) or of the holding hoop to the accessory holder (14).

## Revendications

1. Dispositif de fixation d'accessoires pour cycles, comportant
- une partie de base (11) avec un premier tronçon à pas de vis (15) et avec une échancrure d'emprisonnement (17) pour recevoir un tronçon de barreau de cycle (47), l'échancrure d'emprisonnement subdivisant le premier tronçon à pas de vis en deux zones à pas de vis (21, 22) opposées l'une à l'autre,
- un élément de fixation (12) avec un deuxième tronçon à pas de vis (23), qui coopère avec le premier tronçon à pas de vis (15) de telle sorte que par vissage de l'élément de fixation (12) avec la partie de base (11), le tronçon de barreau de cycle (47) est susceptible d'être fixé dans l'échancrure d'emprisonnement (17), et
- une monture d'accessoires (14) pour recevoir un accessoire de cycle (49).

2. Dispositif de fixation d'accessoires selon la revendication 1, **caractérisé en ce que** l'échancrure d'emprisonnement (17) est réalisée sous forme de fente allongée sur la partie de base (11).

3. Dispositif de fixation d'accessoires selon l'une ou l'autre des revendications précédentes, **caractérisé en ce que** la partie de base (11) comprend une tige filetée sur laquelle le premier tronçon à pas de vis est réalisé sous forme de filetage (15), et **en ce que** le deuxième tronçon à pas de vis est réalisé sous forme de taraudage (23) sur l'élément de fixation (12), un dispositif central de solidification (27) étant prévu de préférence pour venir s'engager dans l'échancrure d'emprisonnement ( 17) de la partie de base (11).

4. Dispositif de fixation d'accessoires selon l'une des revendications précédentes, **caractérisé en ce que** le premier tronçon à pas de vis est réalisé sous forme de taraudage sur la partie de base et le deuxième tronçon à pas de vis est réalisé sous forme de filetage sur l'élément de fixation.

5. Dispositif de fixation d'accessoires selon l'une des revendications précédentes, **caractérisé en ce que** la partie de base comprend un premier tronçon de serrage (51) délimitant l'échancrure d'emprisonnement (17), et **en ce que** l'élément de fixation (11) ou une pièce de maintien supplémentaire (13) comprend un deuxième tronçon de serrage (33) qui coopère avec le premier tronçon de serrage pour fixer le tronçon de barreau de cycle (47), le premier tronçon de serrage (51) et/ou le deuxième tronçon de serrage (33) étant réalisé(s) de préférence pour une coopération de formes avec le tronçon de barreau de cycle (47).

6. Dispositif de fixation d'accessoires selon l'une des revendications précédentes, **caractérisé en ce que** l'élément de fixation (12) ou une pièce de maintien supplémentaire (13) comprend un organe de fixation, en particulier un mandrin de fixation central qui, lors du vissage de l'élément de fixation avec la partie de base, vient s'engager dans l'échancrure d'emprisonnement (17), et/ou **en ce que** pour le vissage avec la partie de base (11), l'élément de fixation (12) comprend un dispositif d'attaque (25) pour recevoir un outil.

7. Dispositif de fixation d'accessoires selon l'une des revendications précédentes, **caractérisé en ce qu'**il est prévu une pièce de maintien (13) sur laquelle est agencée la monture d'accessoires (14).

8. Dispositif de fixation d'accessoires selon la revendication 7, **caractérisé en ce que** la pièce de maintien (13) est susceptible d'être fixée, en particulier serrée, sur la partie de base (11) et sur l'élément de fixation (12) par vissage de l'élément de fixation (12), et/ou **en ce que** la pièce de maintien (13) est susceptible d'être fixée dans une position angulaire à choisir librement sur la partie de base (11) et sur l'élément de fixation (12).

9. Dispositif de fixation d'accessoires selon l'une ou l'autre des revendications 7 et 8, **caractérisé en ce que** la pièce de maintien (13) comprend un collet entraîneur (33) pour prendre appui contre l'élément de fixation (12), et/ou **en ce que** la pièce de maintien (13) comprend un tronçon d'emprisonnement (31) pour emprisonner l'élément de fixation (12) et/ou la partie de base (11), et/ou **en ce que** la monture d'accessoires (14) est fixée avec faculté de rotation sur la pièce de maintien (13), la monture d'accessoires (14) étant susceptible d'être fixée de préférence dans une position angulaire de rotation prédéterminée par rapport à la pièce de maintien (13).

10. Dispositif de fixation d'accessoires selon l'une des revendications précédentes, **caractérisé en ce que** la monture d'accessoires (14) comprend un logement d'accessoires (45) ainsi qu'un ruban de serrage élastique (39) ou un étrier de maintien pour fermer le logement d'accessoires, la monture d'accessoires comprenant de préférence un organe d'accrochage (41) ou un organe d'arrêt pour fixer l'extrémité libre (43) du ruban de serrage (39) ou de l'étrier de maintien sur la monture d'accessoires (14).
